# DEMANDE DE BREVET EUROPEEN

(11) **EP 0 967 106 A1**
(43) Date de publication de la demande: **29.12.1999**
(21) Numéro de dépôt: 99111873.8
(22) Date de dépôt: 21.06.1999
(51) Int. Cl.: B60K 37/02, B60R 16/02

(54) **Tableau de commande a circuit imprime, notamment pour véhicule automobile**

(30) Priorité: 23.06.1998 FR 9807927
(71) Demandeur: Valeo Electronique, 94042 Créteil (FR)
(72) Inventeur: Lacroix, Louis, 94500 Champigny sur marne (FR)
(74) Mandataire: Gamonal, Didier

(57) **Abrégé**

L'invention concerne un tableau de commande du type à circuit imprimé, destiné tout particulièrement à un véhicule automobile. Ce tableau de commande comprend un bâti (2) muni d'une façade (3), un premier circuit électronique, un dispositif d'affichage (4) connecté au premier circuit électronique et placé derrière une fenêtre de la façade (3), des moyens de saisie (6,7) comprenant un second circuit électronique connecté au premier circuit électronique, ainsi qu'une carte (1) sur laquelle reposent le premier et second circuit électronique. Selon l'invention, la carte (1) du tableau de commande est agencée sensiblement horizontalement dans le bâti (2) et forme un angle sensiblement voisin de 90° avec le dispositif d'affichage (4), tandis que les moyens de saisie (6,7) reposent sensiblement sur une face supérieure de la carte, devant ladite fenêtre.

## Description

L'invention concerne un tableau de commande du type à circuit imprimé, destiné tout particulièrement à un véhicule automobile.

Les tableaux de commande de ce type comprennent généralement un bâti muni d'une façade, un circuit imprimé porté par le bâti et un dispositif d'affichage relié au circuit imprimé et placé derrière une fenêtre de la façade.

Un tel tableau peut être utilisé, par exemple, pour la commande d'une installation de ventilation, chauffage et/ou climatisation de l'habitacle d'un véhicule automobile.

La façade du tableau est alors intégrée, généralement dans une position sensiblement verticale, dans la planche de bord ou encore dans la console du véhicule automobile, de sorte que le dispositif d'affichage puisse être visible du conducteur. La façade loge habituellement un clavier composé d'une pluralité d'organes, du type touches, boutons ou analogues, susceptibles d'être actionnés par le conducteur du véhicule. La façade loge généralement des moyens d'éclairage du clavier et différents symboles ou pictogrammes, notamment pour une conduite de nuit. En outre, la façade peut loger des témoins de fonction éclairants, telles que des diodes électroluminescentes qui sont allumées en position de fonctionnement.

On connaît des tableaux de commande du type précité, dans lesquels des circuits électroniques associés aux moyens d'éclairage, aux connexions des dispositifs d'affichage et aux éléments se rattachant au clavier, sont disposés sur deux circuits imprimés (ou cartes) distincts, disposés perpendiculairement entre eux et pouvant être soit séparées, soit au contact l'un de l'autre. Cette solution nécessite des moyens particuliers pour la fixation du dispositif d'affichage derrière la façade du tableau de commande. Ces moyens peuvent consister, par exemple, en une connexion souple entre un dispositif d'affichage et l'un des circuits imprimés.

Ces solutions sont coûteuses et ne permettent pas de garantir toujours un maintien correct du dispositif d'affichage et appui derrière la façade, d'où il résulte parfois des vibrations et un jeu apparent sur le pourtour du dispositif d'affichage.

Par ailleurs, ces solutions sont généralement volumineuses aussi bien au niveau de la façade qu'à l'arrière de celle-ci. En effet, lorsqu'elles intègrent un afficheur, il faut disposer autour de celui-ci ou dans ses environs les différents boutons de commande nécessaires pour la gestion de l'installation ventilation, chauffage et/ou climatisation. Dans le cadre d'une réduction en hauteur des tableaux de commande, réduction imposée par les constructeurs automobiles dans l'optique d'une standardisation des formats au format « autoradio », il est nécessaire de réduire la hauteur en façade de ces tableaux de commande.

L'invention vient améliorer la situation.

Elle porte alors sur un tableau de commande, du type décrit en introduction, comprenant un bâti muni d'une façade, un premier circuit électronique reposant sur une carte que porte le bâti et solidarisée par des moyens de maintien, un dispositif d'affichage connecté au premier circuit électronique et placé derrière une fenêtre de la façade, des moyens de saisie comprenant un second circuit électronique connecté au premier circuit électronique, ainsi qu'une carte unique sur laquelle reposent le premier et second circuit électronique.

Selon une définition générale de l'invention, la carte unique du tableau de commande est agencée sensiblement horizontalement dans le bâti et forme un angle sensiblement voisin de 90° avec le dispositif d'affichage, tandis que les moyens de saisie reposent sensiblement sur une face supérieure de la carte, devant ladite fenêtre.

Le gain de place réalisé, notamment au niveau de la hauteur de la façade du tableau de commande, grâce à cet assemblage est tout à fait important et permet une déportation des boutons de commande.

Grâce à cette disposition, l'arrière de la façade est libre pour implanter l'unique carte et tous les éléments nécessaires à la commande de l'installation.

L'un des nombreux avantages découlant de l'agencement des circuits électroniques sur une seule carte et à sa disposition horizontale dans le bâti, est qu'il est ainsi possible de réaliser plusieurs soudures en une seule opération au montage.

Selon une autre caractéristique avantageuse de l'invention, les moyens de connexion du dispositif d'affichage au premier circuit électronique sont sensiblement rigides et reposent sur la carte.

Selon une autre caractéristique avantageuse de l'invention, les moyens de saisie précités comportent un clavier comprenant des organes de commande qui reposent sur la carte précitée.

La disposition avantageuse de la façade et de l'afficheur par rapport au clavier permet d'avoir des organes de commandes vierges de toute décoration ce qui est très économique.

Par ailleurs cette disposition encastrée de l'afficheur évite les reflets du soleil sur celui-ci.

Avantageusement, le clavier comporte une plaque de protection propre à recouvrir la carte et comportant des évidements desquels les organes de commande font saillie. Cette plaque forme en outre une boîte à lumière propre a éclairer les organes de commande.

De préférence, la plaque de protection est agencée à distance de la carte, de sorte que la plaque et la carte guident sensiblement une lumière issue de moyens d'éclairage que comporte le tableau de commande, pour éclairer les organes de commande du clavier.

Selon une autre caractéristique optionnelle avantageuse de l'invention, les moyens de maintien précités comportent au moins une vis propre à traverser un trou oblong que comporte la carte, et a s'engager dans un logement homologue que comporte le bâti.

Avantageusement, les moyens de maintien comportent en outre, des moyens faisant ressorts permanents, solidaires du bâti, par exemple d'une paroi de fond de celui-ci. Ces moyens faisant ressorts s'appuient sur la carte pour la solliciter en direction de la façade, ce qui permet ainsi de maintenir le dispositif d'affichage dans une position dans laquelle il forme un angle d'environ 90° avec la carte.

Selon une autre caractéristique optionnelle de l'invention, le premier circuit électronique et/ou le second circuit électronique s'étendent sur au moins des parties respectives d'une face supérieure et d'une face inférieure de cette carte.

D'autres avantages et caractéristiques de l'invention apparaîtront à la lecture de la description détaillée ciaprès et des dessins annexés sur lesquels :
- la figure 1 représente schématiquement une vue de côté d'un tableau de commande selon l'invention;
- la figure 2 représente une vue plus détaillée du tableau de commande représenté sur la figure 1;
- la figure 3 représente une vue arrière du tableau de commande;
- la figure 4 représente une vue de face du tableau de commande selon l'invention, et plus particulièrement son dispositif d'affichage; et
- la figure 5 représente une vue de dessus du tableau de commande.

Les éléments décrits sont de caractère certain. Ils contribuent non seulement à mieux faire comprendre l'invention, mais aussi à la définir, le cas échéant.

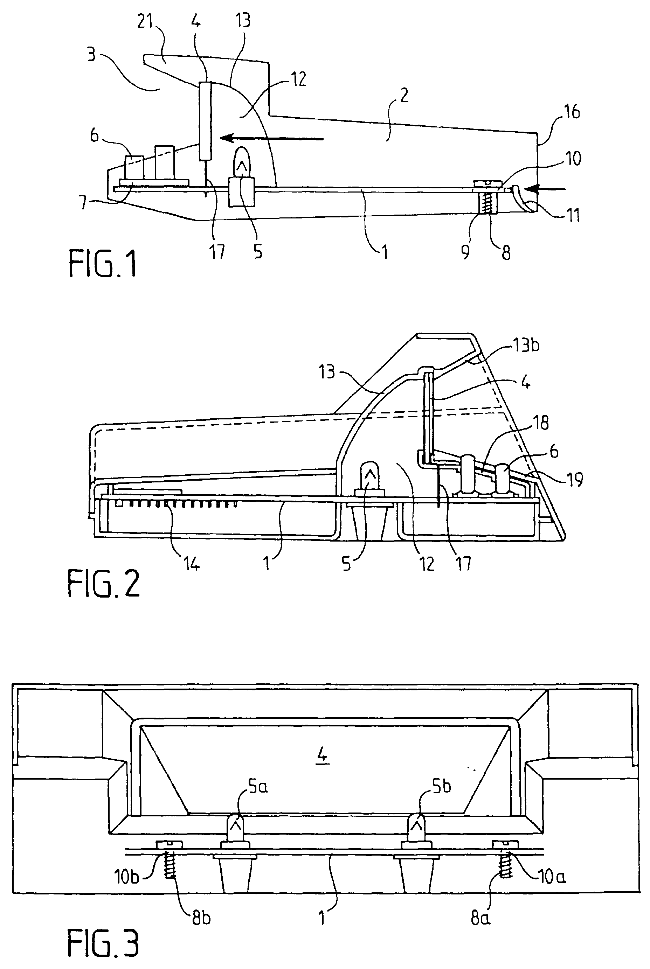

On se réfère tout d'abord à la figure 1 pour décrire un tableau de commande d'une installation de ventilation chauffage et/ou climatisation d'un véhicule automobile dans l'exemple décrit. Un tel tableau de commande est destiné particulièrement à être logé dans la planche de bord du véhicule, le dispositif d'affichage 4 étant visible des passagers de l'habitable, et plus particulièrement du conducteur. Le tableau de commande comporte globalement un bâti 2, propre à loger un circuit imprimé (ou carte) généralement connecté au dispositif d'affichage 4, à des organes de commande 6, à des moyens d'éclairage 5, ainsi qu'à des moyens de connexion 14 d'éléments de l'installation précitée (groupe moto-ventilateur, volets de distribution et/ou de mixage, capteurs, notamment en température, ...). Comme le montre la figure 1, le tableau de commande selon l'invention ne comporte qu'une seule carte 1 supportant les circuits électroniques précités, cette carte étant disposée de façon sensiblement perpendiculaire par rapport à la façade 3 du tableau.

Dans l'exemple décrit, le dispositif d'affichage 4 est un écran à cristaux liquides, préférentiellement éclairé par au moins une lampe 5. Le bâti 2 comporte alors une cloison interne 13 pour former une boîte à lumière, de sorte que la lumière que fournit la lampe 5 soit orientée vers l'écran 4. Selon l'invention, la carte 1 porte par ailleurs un clavier de commande 7 comportant, dans l'exemple décrit, des touches à enfoncement, et reposant sur la carte 1 (figure 2). Par ailleurs, le bâti 2 présente une façade 3, l'écran 4 étant logé derrière une fenêtre de cette façade 3.

Le bâti 2 comporte en outre une protubérance 21, en sa partie supérieure, qui se prolonge vers la façade 3. Cette protubérance 21 permet avantageusement de limiter des reflets lumineux, par exemple du soleil, sur l'écran à cristaux liquides 4.

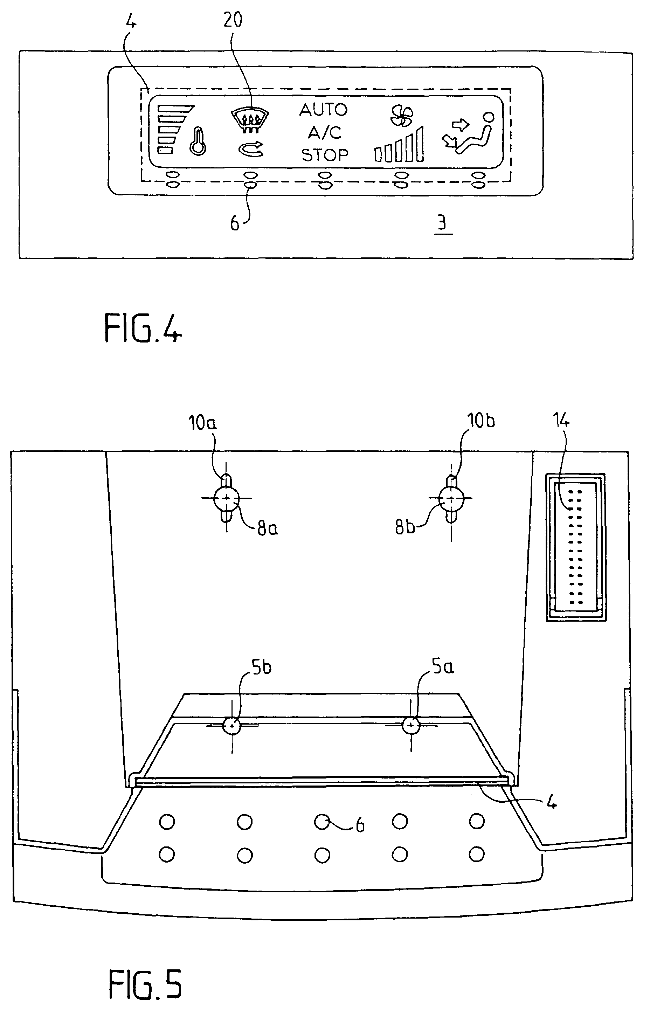

La carte 1 comporte en outre deux évidements dans l'exemple décrit, 10a et 10b de forme oblongue (figure 3, figure 5). Il est prévu par ailleurs des vis 8a et 8b propres à traverser les évidements 10a et 10b, respectivement, et à être fixées dans des logements homologues 9 (figure 1) que comporte le bâti 2. Le tableau de commande selon l'invention comporte une patte souple 11 solidaire d'une paroi de fond du bâti 16 (figure 1), qui vient s'appuyer sur la carte 1 pour la pousser en avant du bâti 2, formant ainsi les moyens faisant ressorts permanents. Une telle configuration limite avantageusement un jeu susceptible d'entraîner des fuites de lumière et permet de réduire sensiblement des vibrations.

Les formes oblongues des évidements 10a et 10b de la carte, permettent de placer la carte 1 dans une position préférée, lors du montage du tableau de commande sur la planche de bord du véhicule. Par ailleurs, l'écran du véhicule 4 est connecté au circuit électronique de la carte 1 par des moyens de connexion rigides 17. Dans l'exemple décrit, ces moyens de connexion sont réalisés sous la forme de pattes métalliques conductrices venant au contact de connexions prévues sur la carte 1. Ainsi, lors du montage du tableau de commande selon l'invention, la patte souple 11 maintient la plaque 1 et l'écran 4 dans des positions respectives préférées. La partie supérieure de l'écran 4 est maintenue par une rainure que forme la jonction des cloisons 13 et 13b (figure 2) du bâti 2. Dans l'exemple décrit, l'écran 4 à cristaux liquides forme un angle voisin de 90° avec la carte 1.

Cette architecture permet de réduire la connectique globale du système et notamment entre l'afficheur et son unité de commande ce qui a pour effet de rendre l'afficheur moins sensible aux décharges électrostatiques.

On se réfère maintenant à la figure 2 pour décrire, à titre d'exemple, la structure détaillée du tableau de commande. Le clavier 7 supporte des touches 6, réalisées dans un matériau translucide, dans l'exemple. Il est prévu de disposer une plaque de protection 18 comportant des évidements dans lesquels pénètrent les touches 6 du clavier. En outre, cette plaque de protection 18 joue avantageusement le rôle de boîte à lumière pour guider une lumière jusqu'aux touches 6. Par ailleurs, les pattes rigides des moyens de connexion 17 de l'écran 4 sont suffisamment espacées pour que la lumière issue de la lampe 5 puisse atteindre les touches translucides 6, pour les éclairer, par exemple lors d'une conduite de nuit. En pratique, ces touches sont réalisées sous la forme d'une nappe de touches élastomères, translucides.

Dans cette mise en oeuvre, il est tout à fait possible d'avoir des touches sans décoration car au niveau visuel il est possible de faire une correspondance directe entre les fonctions présentées sur l'afficheur et les touches commandant ces mêmes fonctions.

Dans l'exemple décrit, le tableau de commande comporte deux ampoules 5a et 5b (figure 3). En variante, il peut être prévu également de disposer des diodes électroluminescentes à proximité des touches ou dans les touches, alors que celles-ci présentent une forme creuse, ou encore des lampes avec conduit ou des fibres optiques. Il peut être prévu en outre des diodes électroluminescentes derrière l'écran à cristaux liquides 4. Dans l'exemple représenté sur la figure 2, l'agencement des lampes 5 permet avantageusement d'éclairer à la fois l'écran 4 et les touches 6, baignant dans un espace que définit la boite à lumière 12, et délimité notamment par la cloison interne 13 du bâti 2.

Les broches de connexion 14 (figure 5) permettent de connecter les éléments de l'installation, tel qu'un pulseur d'un groupe moto-ventilateur pour produire un flux d'air dans l'habitacle du véhicule automobile, des actionneurs de réglage de la position de volets de mixage pour ajuster la température du flux d'air précité, de volets de recirculation d'air dans l'habitacle, de volets de distribution d'air, ...

Sur la figure 4 est représenté un exemple de réalisation du dispositif d'affichage du tableau de commande selon l'invention. Il s'agit d'un écran 4 à cristaux liquides, comportant une pluralité de pictogrammes 20. Dans l'exemple décrit, cet écran permet de visualiser des configurations aérothermiques souhaitées, saisies par un utilisateur, notamment le conducteur du véhicule. Ces configurations sont, dans l'exemple, de la gauche de l'écran 4 vers la droite, une température d'air souhaitée, un mode de dégivrage du pare-brise du véhicule, une recirculation d'air dans l'habitacle, un déclenchement automatique d'une régulation en température et en vitesse d'air ventilé dans l'habitacle (pictogramme "auto"), une mise en service d'une boucle de climatisation (pictogramme "A/C"), un arrêt de fonctionnement de l'installation ("stop"), une vitesse du pulseur du groupe moto-ventilateur liée à la vitesse d'air ventilé dans l'habitable, et une répartition du flux ventilé dans l'habitacle entre une aération centrale (flèche horizontale) et une aération basse (flèche oblique). Ainsi, il est prévu un ensemble de broches 14 pour être connectées à des capteurs en température et éventuellement en vitesse d'air, pour assurer une régulation en température et en vitesse dans l'habitacle selon le mode "auto" précité. En variante, le mode "auto" peut concerner une commande à distance, pilotée par un système auxiliaire de radionavigation, par exemple. Les touches sont disposées devant l'écran d'affichage de manière à avoir avantageusement une correspondance immédiate entre une touche et un symbole de l'afficheur. Les touches ne possèdent donc pas nécessairement de décoration. Cette correspondance immédiate, entre l'afficheur et les touches, peut être encore facilitée par des touches de formes variables et indiquant la commande qu'elles réalisent : touche ayant une forme de +, touche ayant une forme de -, touche ↓, touche ↑.

Enfin, la carte supportant le dispositif d'affichage peut être réalisée sous la forme d'un tiroir sur rails, agencé pour se déplacer entre deux positions prédéterminées, dans l'une desquelles la carte est connectée à des moyens d'alimentation électrique, tandis que le dispositif d'affichage est appliqué sur la façade par les moyens faisant ressorts précités. On définit ainsi une position de travail (carte connectée) et une position de repos (carte déconnectée) dans laquelle la carte 1 est préférentiellement enfoncée dans le bâti 2. La carte mobile possède donc une latitude de positionnement avant/arrière qui lui permet de s'adapter lors du montage. Ainsi lorsque la carte est bien repoussée vers l'avant c'est à dire en direction de la façade, on a un contact parfait avec l'afficheur ce qui permet d'éviter tout jeu, les vis perpendiculaires préréglées assurant la position et bloquent définitivement l' assemblage.

L'assemblage ainsi réalisé présente donc une afficheur encastré en profondeur par rapport à la planche de bord. Ceci est tout à fait avantageux et permet d'éviter les reflets du soleil sur l'afficheur. Les erreurs de manipulations sont alors réduites.

Bien entendu, la présente invention n'est pas limitée à la forme de réalisation décrite ci-avant à titre d'exemple.

Elle s'étend à d'autres variantes.

Ainsi, on comprendra que le dispositif d'affichage 4 peut se présenter sous une forme différente d'un écran à cristaux liquides, par exemple un écran à diode électroluminescente, ou autre.

Dans l'exemple décrit, la paroi de fond 16 du bâti 2 comporte une patte élastique souple 11. Dans une variante, une lame-ressort, ou encore tous autres moyens faisant ressorts permanents peuvent assurer cette fonction.

Par ailleurs, il a été décrit ci-avant un tableau comportant un clavier 7 à touches. Cependant, de façon plus générale, la carte 1 supporte des moyens de saisie qui peuvent se présenter sous la forme de boutons rotatifs ou autres. On peut imaginer en outre un écran tactile reposant sur la carte 1, pour saisir des configurations aérothermiques souhaitées dans l'habitacle. De plus, les touches décrites ci-avant ne sont pas nécessairement réalisées dans un matériau translucide. En variante, elles peuvent être réalisées dans un matériau opaque, tandis que le tableau de commande comporte par exemple des moyens d'éclairage extérieurs pour une conduite de nuit.

Les pictogrammes représentés sur la figure 4 ne sont décrits ici qu'à titre d'exemple. C'est ainsi que le nombre de pictogrammes et leur forme générale sont susceptibles de varier suivant les applications du tableau de commande selon l'invention.

L'angle de 90° que forme le dispositif d'affichage 4 avec la carte 1 n'est donné ici qu'à titre d'exemple. Dans une variante, cet angle peut être encore différent.

Par ailleurs, la cloison interne 13 du bâti 2 délimitant la boîte à lumière 12, comporte un caractère optionnel. Dans une variante, elle est susceptible de modifications, voire d'être supprimée.

Par ailleurs, les pattes rigides 17 de l'écran 4 sont décrites ci-avant à titre d'exemple. Dans une variante, l'écran 4 peut être maintenu par des moyens prévus à cet effet directement sur le bâti 2, par exemple des rainures pour l'encastrer. Ainsi, les moyens de connexion de l'écran 4 au circuits électroniques que porte la carte 1 peuvent être souples.

Enfin, l'invention ne se limite pas à un tableau de commande d'une installation de ventilation, chauffage et/ou climatisation d'un véhicule automobile. Elle vise également tous tableaux de commande comportant au moins un circuit électronique connecté d'une part à des moyens de saisie et d'autre part à des interfaces de réglage d'éléments alimentés électriquement.

## Revendications

1. Tableau de commande, notamment pour un véhicule automobile, du type comprenant un bâti (2) muni d'une façade (3), un premier circuit électronique, un dispositif d'affichage (4) connecté au premier circuit électronique et placé derrière une fenêtre de la façade (3), des moyens de saisie (6, 7) comprenant un second circuit électronique connecté au premier circuit électronique, ainsi qu'une carte (1) sur laquelle reposent le premier et second circuit électronique
caractérisé en ce que la carte (1) est agencée sensiblement horizontalement dans le bâti (2) et forme un angle sensiblement voisin de 90° avec le dispositif d'affichage (4), tandis que les moyens de saisie (6,7) reposent sensiblement sur une face supérieure de la carte, devant ladite fenêtre.

2. Tableau de commande selon la revendication 1, caractérisé en ce que le dispositif d'affichage (4) comporte des moyens de connexion (17) au premier circuit électronique, sensiblement rigides et reposant sur la carte (1).

3. Tableau de commande selon l'une des revendications 1 à 2, caractérisé en ce que lesdits moyens de saisie comporte un clavier (7) comprenant des organes de commande (6) reposant sur ladite carte (1).

4. Tableau de commande selon la revendication 3, caractérisé en ce que le clavier (7) comporte une plaque de protection (18) propre à recouvrir la carte (1), et en ce que ladite plaque (18) comporte des évidements desquels les organes de commande font saillie.

5. Tableau de commande selon l'une des revendications 1 à 4, caractérisé en ce qu'il comporte des moyens d'éclairage (5a,5b) de la façade (3) disposés en arrière de ladite façade et reposant sur la carte (1).

6. Tableau de commande selon la revendication 5, caractérisé en ce qu'il comporte une cloison interne (13) formant avec la carte (1) et la plaque de protection (18), agencée sensiblement à distance de la carte (1), une boîte à lumière guidant sensiblement une lumière issue des moyens d'éclairage (5a,5b) pour illuminer les organes de commande (6).

7. Tableau de commande selon la revendication 6, caractérisé en ce que lesdits organes de commande (6) sont réalisés dans un matériau translucide.

8. Tableau de commande selon l'une des revendications 5 à 7, caractérisé en ce que le dispositif d'affichage comporte un écran à cristaux liquides (4), tandis que les moyens d'éclairage (5a,5b) sont agencés pour illuminer ledit écran (4).

9. Tableau de commande selon la revendication 8, caractérisé en ce que les moyens de connexion de l'écran à cristaux liquides (4) comportent une pluralité de pattes conductrices (17), espacées les unes des autres pour que lesdits moyens d'éclairage illuminent sensiblement à la fois l'écran (4) et les organes de commande (6).

10. Tableau de commande selon l'une des revendications précédentes, caractérisé en ce qu'il comporte des moyens de maintien comprenant au moins une vis (8a,8b) propre à traverser un trou oblong (10a,10b) que comporte la carte (1), et à s'engager dans un logement homologue (9) que comporte le bâti (2).

11. Tableau de commande selon la revendication 10, caractérisé en ce que les moyens de maintien comprennent en outre des moyens faisant ressorts permanents (11), solidaires du bâti et s'appuyant sur la carte (1) pour solliciter ladite carte en direction de la façade (3).

12. Tableau de commande selon l'une des revendications précédentes, caractérisé en ce que le premier circuit électronique et/ou le second circuit électronique s'étendent sur au moins des parties respectives d'une face supérieure et d'une face inférieure de la carte (1).
